# EUROPÄISCHE PATENTSCHRIFT

(11) **EP 1 125 692 B1**
(45) Veröffentlichungstag und Bekanntmachung des Hinweises auf die Patenterteilung: **27.07.2005**
(21) Anmeldenummer: 01102480.9
(22) Anmeldetag: 05.02.2001
(51) Int. Cl.: B25H 7/02, B25H 1/00, G01B 3/56, G01B 5/24

(54) **Mess- und Anschlagwinkel**
Combination square and protractor
Equerre à rapporteur et talon

(30) Priorität: 18.02.2000 DE 10007447; 17.01.2001 DE 20100809 U
(43) Veröffentlichungstag der Anmeldung: 22.08.2001
(73) Patentinhaber: Klapperich, Leo, D-56653 Wehr (DE)
(72) Erfinder: Klapperich, Leo, D-56653 Wehr (DE)
(74) Vertreter: Kossobutzki, Walter, Dipl.-Ing.(FH)

(56) Entgegenhaltungen:
- WO-A-87/02314
- US-A- 345 196
- US-A- 4 348 815
- US-A- 5 493 789

## Beschreibung

Die Erfindung bezieht sich auf eine Vorrichtung zur Bildung von Winkeln, bestehend aus einer linealartigen Grundschiene und einer auf derselben in unterschiedlichen Positionen dreh-und feststellbaren Anschlagschiene. Eine derartige Vorrichtung ist aus der US 4 348 815 bekannt.

Es ist eine als Meß- und Anschlagwinkel bezeichnete Vorrichtung bekannt, die aus einer Grundschiene aus Aluminium besteht, an der eine linealartige Meßskala vorgesehen ist. Mit Abstand von einem Ende der Grundschiene ist eine Schraube ortsfest angeordnet, an der mittels einer Mutter eine Anschlagschiene dreh- und feststellbar ist. Die Anschlagschiene kann dabei unterschiedliche Winkellagen zur Grundschiene einnehmen. Bei einer solchen Vorrichtung wird es als nachteilig angesehen, dass es mit derselben nicht möglich ist, in einer Ecke zu messen und die Ausgangslage der Anschlagschiene an der Grundschiene zu verändern. Ferner gestattet die vorbekannte Vorrichtung keinen links-und rechtsseitigen Einsatz. Der Einsatzzweck eine solchen Vorrichtung ist begrenzt.

Der Erfindung liegt deshalb die Aufgabe zugrunde, eine Vorrichtung zur Bildung von Winkeln so auszugestalten, dass die Ausgangslage der Anschlagschiene zur Grundschiene über die gesamte Länge der Grundschiene veränderbar und der Einsatz der Vorrichtung auch in Ecken möglich ist. Zusätzlich soll erreicht werden, daß mit einer solchen Vorrichtung auch andere Meß- und Anreißarbeiten durchgeführt werden können.

Zur Lösung dieser Aufgabe wird gemäß der Erfindung bei einer Vorrichtung der eingangs beschriebenen Gattung vorgeschlagen, dass die Grundschiene eine in Längsrichtung verlaufende Führung zur verschiebbaren Aufnahme der Anschlagschiene aufweist und die Unterseite der Anschlagschiene mit unter einem spitzen Winkel zueinander sternförmig verlaufenden Vertiefungen zur Aufnahme eines an der Grundschiene befindlichen Vorsprunges versehen ist.

Durch diese Ausgestaltung kann die Ausgangslage der Anschlagschiene über die gesamte Länge der Grundschiene verschoben und damit frei gewählt werden. Dadurch ist es möglich, die Vorrichtung auch in Ecken einzusetzen. Der Vorsprung bzw. dessen Ausgestaltung läßt es in Verbindung mit den sternförmig verlaufenden Vertiefungen an der Unterseite der Anschlagschiene zu, dass die Anschlagschiene über die gesamte Länge der Grundschiene in 15°-Schritten ein- und feststellbar ist. Die erfindungsgemäße Vorrichtung ist sowohl links- als auch rechtsseitig einsetzbar und kann auch von Links- und/oder Rechtshändern gehandhabt werden. Die Vorrichtung ist sowohl als Flachwinkel als auch als Anschlagwinkel einsetzbar, wobei sowohl die Grundschiene als auch die Anschlagschiene als Führungshilfe für Werkzeuge nutzbar ist. Die Vorrichtung kann zum Messen, Anreißen und Schneiden verwendet werden.

Weitere Merkmale einer Vorrichtung gemäß der Erfindung sind in den Ansprüchen 2 bis 16 offenbart.

Die Erfindung wird nachfolgend anhand in einer Zeichnung dargestellte Ausführungsbeispieles näher erläutert. Dabei zeigen
- Fig. 1: eine Draufsicht auf eine Vorrichtung gemäß der Erfindung,
- Fig. 2: einen Schnitt durch die Grundschiene der Fig. 1 im Bereich der Anschlußschiene,
- Fig. 3: einen anderen Querschnitt der Grundschiene im Schnitt,
- Fig. 4: eine Draufsicht auf eine Grundschiene mit einer Libelle und einer Bohrlehre,
- Fig. 5: eine Draufsicht auf eine Grundschiene mit einer Führung für ein Ziehmesser und
- Fig. 6: einen der Fig. 2 entsprechenden Schnitt mit einem Körner.

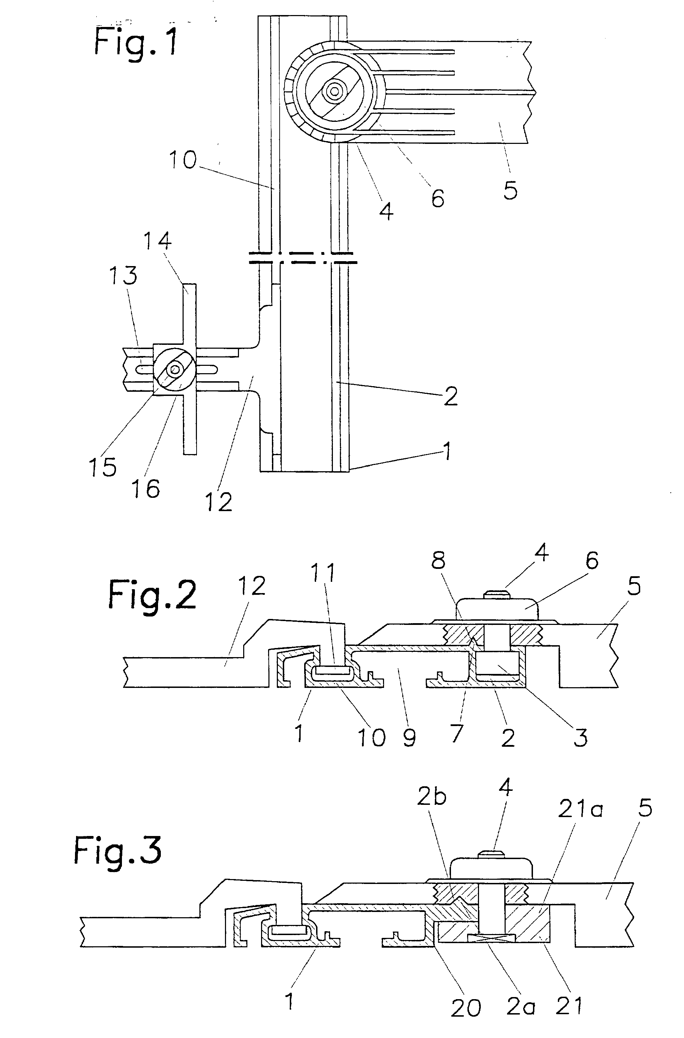

In den Figuren 1 und 2 der Zeichnung ist eine Vorrichtung gezeigt, die zur Bildung von Winkeln dient. Diese Vorrichtung kann dabei sowohl als Flachwinkel als auch als Anschlagwinkel eingesetzt werden. Sie wird zum Messen, Anreißen, Schneiden, Sägen und Fräsen verwendet.

Diese Vorrichtung besteht zunächst aus einer Grundschiene 1 beispielsweise aus Aluminium, die an ihrer Oberseite, zumeist am Rand, mit einer an sich bekannten, jedoch nicht dargestellten Maßskala mit Millimeter-Einteilung versehen ist. Die Grundschiene 1 weist den aus der Figur 2 erkennbaren Querschnitt auf und kann im Strangpreßverfahren zunächst kontinuierlich gefertigt und dann auf die gewünschte Länge zugeschnitten werden. Bei dem dargestellten Ausführungsbeispiel weist die Grundschiene 1 an ihrer in der Figur 1 sichtbaren Oberseite eine als hinterschnittene Nut 2 ausgebildete Führung auf, die in vorteilhafter Weise T-förmigen Querschnitt besitzt. In diese Nut 2 ist der Kopf 3 einer Schraube 4 eingesetzt, die nach oben ragt und auf der eine Anschlagschiene 5 aufgesteckt ist. Die Anschlagschiene 5 ist aus Blech oder Kunststoff geformt und mittels einer Mutter 6 auf der Grundschiene 1 gesichert. Durch Verschieben der Schraube 4 in der Nut 2 kann die Anschlagschiene 5 jede beliebige Ausgangslage über die Länge der Grundschiene 1 einnehmen.

Die Grundschiene 1 ist an der Oberseite der Nut 2 mit einer in Längsrichtung verlaufenden Rippe 7 versehen, deren Querschnitt weitgehend beliebig sein kann, jedoch vorteilhaft dreieckigen Querschnitt besitzt. Die Anschlagschiene 5 besitzt nun mehrere, beispielsweise unter einem Winkel von 15 ° sternförmig verlaufende, rillenartige Vertiefungen 8, die dem Querschnitt der Rippe 7 entsprechen. Dadurch ist es möglich, dass die Anschlagschiene 5 variabel in 15°-Schritten zur Grundschiene 1 ein- und feststellbar ist. In diesem Ausführungsbeispiel weist die Unterseite der Grundschiene 1 eine weitere Nut 9 auf, in die der Kopf einer an sich bekannten Festspanneinrichtung, beispielsweise einer Zwinge eingeschoben werden kann (Fig.2). Diese Nut 9 ist ebenfalls hinterschnitten und kann einen T-förmigen Kopf aufnehmen. Über die Festspanneinrichtung kann somit die Grundschiene 1 an einem Tisch oder einer Werkbank oder auch an einem Werkstück festgeschraubt werden.

Schließlich weist die Grundschiene 1 an ihrer Oberseite noch eine Führung 10 auf, die hier als Nut ausgebildet ist und die ebenfalls T- förmigen Querschnitt besitzt. Diese Führung 10 kann auch an der Unterseite oder an einer Seitenfläche der Grundschiene 1 vorgesehen sein. Auch die Ausbildung der Führung 10 als hinterschnittenen Rippe ist möglich. In diese Führung 10 kann ein Führungsteil 11 einer Leiste 12 führend eingeschoben werden. Die eigentliche Führung der Leiste 12 in der Führung 10 erfolgt dabei durch die seitlichen, oberen Begrenzungsflächen der als Nut ausgebildeten Führung 10. Die Leiste 12 nimmt normalerweise immer eine rechtwinklige Lage zur Grundschiene 1 ein. Die Führungsleiste 12 ist im dargestellten Ausführungsbeispiel mit mindestens einem Langloch 13 versehen, in dem ein Anschlag 14 verschoben werden kann. Mittels einer Schraube 15 mit Mutter 16 kann der Anschlag 14 auf der Leiste 12 festgeklemmt werden. Diese Ausgestaltung der Vorrichtung ermöglicht es, dass zwischen der Grundschiene 1 und dem Anschlag 14 beispielsweise eine Säge gesichert und durch Verschieben der Leiste 12 sehr genau geführt werden kann. Die Gefahr, dass das Sägeblatt der Säge nach außen ausweichen kann, ist hier normalerweise nicht mehr vorhanden.

Bei dem Ausführungsbeispiel der Fig. 3 besitzt die Grundschiene 1 keine als Nut 2 ausgebildete Führung. Hier wird die Führung durch eine in Längsrichtung verlaufende Rippe 2a auf der Oberseite der Grundschiene 1 gebildet. Die Anschlagschiene 5 besitzt dann eine dem Querschnitt der Rippe 2a entsprechende Nut 2b. An ihrer Unterseite weist die Grundschiene 1 eine in Längsrichtung verlaufende Aussparung 20 auf, in der ein Klemmstück 21 verschiebbar ist. Das Klemmstück 21 besitzt rechtwinkligen Querschnitt und liegt einerseits mit einem Schenkel 21a an der Unterseite der Anschlagschiene 5 an. Der andere Schenkel 21b des Klemmstückes 21 liegt mit seiner inneren Fläche an der unteren Fläche der Aussparung 20 an. Dieses Anliegen wird durch die Feststellschraube 4 erreicht, deren Kopf 3 drehfest im Klemmstück 21 gesichert ist.

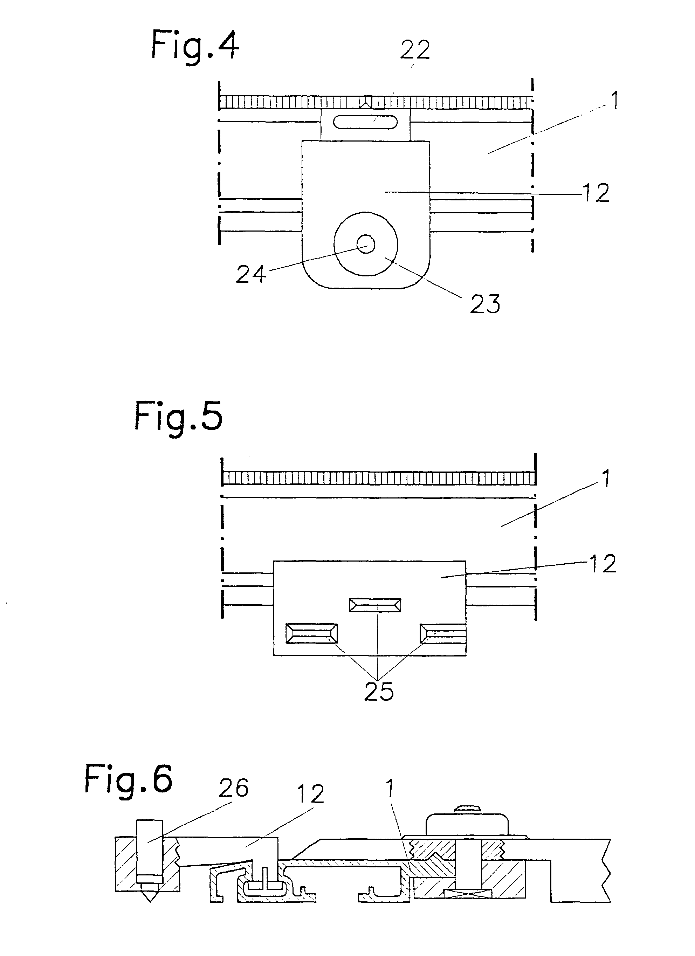

Bei den in den, Fig.4 und 5 gezeigten Ausführungsbeispielen ist jeweils nur ein Ausschnitt aus der Grundschiene 1 gezeigt, in die gemäß der Fig.4 eine Leiste 12 verschiebbar eingesetzt ist, die einerseits eine als Wasserwaage dienende Libelle 22 und andererseits eine Bohrlehre 23 für einen Bohrer besitzt, die beispielsweise durch einen Clipsvorgang auswechselbar befestigt ist. Über die Libelle 22 ist es möglich, die Grundschiene 1 beispielsweise in einer genau horizontalen Lage zu halten. Bei einer anderen Anordnung der Libelle 22 ist eine vertikale Lage der Grundschiene 1 erreichbar. Dabei ist es allerdings auch möglich, zwei Libellen 22 vorzusehen, von denen eine für eine horizontale und die andere für eine vertikale Lage der Grundschiene 1 nutz- bar ist. Bedarfsweise kann die Libelle 22 auch einstellbar an der Leiste 12 angeordnet sein, so daß die Grundschiene 1 auch in einer vorgegebenen Winkellage ausrichtbar ist. Über ein nicht gezeichnetes Klemmmittel kann die Leiste 12 fest mit der Grundschiene 1 verbunden werden.

Die Bohrlehre 23 kann auswechselbar in der Leiste 12 gehalten sein. Sie besitzt eine Bohrung 24, die dem Durchmesser des zu verwendenden Bohrers entspricht, so daß äußerst genau ausgerichtete Bohrungen in einem Bauteil erreichbar sind. Über die eingangs erwähnte und hier eingezeichnete Maßskala an der Grundschiene 1 läßt sich beispielsweise ein sehr genauer Abstand zwischen zwei Bohrungen erreichen. Handelsübliche Bohrlehren 23 können verwendet werden. In der Fig.5 ist die Leiste 12 anders ausgestaltet und weist beispielsweise drei Schlitze 25 auf, in die, je nach Bedarf, ein Ziehmesser für einen Schneidvorgang eingesteckt werden und sehr genau geführt werden kann. Dabei kann das Ziehmesser direkt an der Grundschiene 1 oder mit Abstand davon eingesetzt werden. Der nach außen offene, in der Zeichnung rechte Schlitz 25 ermöglichst auch das Schneiden in Ecken. Die Leiste 12 bietet mit ihren Schlitzen 25 Schutz vor Verletzungen.

Die Fig.6 der Zeichnung zeigt die Grundschiene 1 entsprechend der Fig.3. Hier kommt eine verschiebbare Leiste 12 zur Wirkung, die mit einem Körner 26 bestückt ist. Dieser Körner 26 ist in vorteilhafter Weise klemmend in der Leiste 12 gesichert und ermöglichst das Markieren von Bohrflächen, beispielsweise zur Erstellung eines vorgenannten Lochbildes für das spätere Befestigen von Bilderrahmen.

In Abänderung der erläuterten Ausführungsbeispiele ist es möglich, die Anschlagschiene 5 zweiteilig auszubilden und beispielsweise den die Skala aufnehmenden Teil verschiebbar auf der Grundschiene 1 anzuordnen, während die eigentliche Anschlagschiene 5 drehbar auf dem die Gradskala tragenden Teil gehalten ist. Dabei kann die Anschlagschiene 5 einen Drehpunkt aufweisen, der mit Abstand von der Schraube 4 angeordnet ist. Es ist möglich, die Anschlagschiene 5 am Drehpunkt oder an einer anderen Stelle des die Skala aufnehmenden Teiles festzuklemmen. Ferner kann die die Führung für das Verschieben der Anschlagschiene 5 bildende Nut 2 auch an einer entsprechend ausgebildeten Seitenfläche der Grundschiene 1 vorgesehen sein.

## Patentansprüche

1. Vorrichtung zur Bildung von Winkeln, bestehend aus einer linealartigen Grundschiene und einer auf derselben in unterschiedlichen Positionen dreh- und feststellbaren Anschlagschiene,
**dadurch gekennzeichnet,**
**dass** die Grundschiene (1) eine in Längsrichtung verlaufende Führung zur verschiebbaren Aufnahme der Anschlagschiene (5) aufweist und die Unterseite der Anschlagschiene (5) mit unter einem spitzen Winkel zueinander sternförmig verlaufenden Vertiefungen (8) zur Aufnahme eines an der Grundschiene (1) befindlichen Vorsprunges (7), der in Längsrichtung der Grundschiene verläuft, versehen ist.

2. Vorrichtung nach Anspruch 1,
**dadurch gekennzeichnet,**
**dass** die Führung (2,2b) als Nut (2) oder Rippe (2b) ausgebildet ist.

3. Vorrichtung nach Anspruch 2,
**dadurch gekennzeichnet,**
**dass** die Nut (2) hinterschnitten ausgebildet ist und den Kopf (3) einer Feststellschraube (4) der Anschlagschiene (5) aufnimmt.

4. Vorrichtung nach mindestens einem der Ansprüche 1 bis 3,
**dadurch gekennzeichnet,**
**dass** die Grundschiene (1) an ihrer Unterseite eine hinterschnittene Nut (9) zur Aufnahme des Kopfes einer Festspanneinrichtung aufweist.

5. Vorrichtung nach mindestens einem der Ansprüche 1 bis 4,
**dadurch gekennzeichnet,**
**dass** die Grundschiene (1) eine weitere Führung (10) zur Aufnahme eines Führungsteiles (11) einer Leiste (12) aufweist.

6. Vorrichtung nach Anspruch 5,
**dadurch gekennzeichnet,**
**dass** die Führung (10) an der Oberseite der Grundschiene (1) angeordnet und als Rippe oder Nut ausgebildet ist.

7. Vorrichtung nach Anspruch 5 oder 6,
**dadurch gekennzeichnet,**
**dass** die Leiste (12) mit einem parallel zur Grundschiene (1) verlaufenden, einstellbaren Anschlag (14) versehen ist.

8. Vorrichtung nach mindestens einem der Ansprüche 1 bis 7,
**dadurch gekennzeichnet,**
**dass** die hinterschnittenen Nuten (2, 9, 10), der Kopf (3) der Festellschraube (4), der Kopf der Festspannschraube und der Kopf (11) der Führungsleiste (12) T-förmigen Querschnitt aufweisen.

9. Vorrichtung nach Anspruch 1,
**dadurch gekennzeichnet,**
**dass** der Vorsprung (7) als auf der Oberseite der Grundschiene (1) in Längsrichtung verlaufende Rippe ausgebildet ist.

10. Vorrichtung nach Anspruch 1 und 2,
**dadurch gekennzeichnet,**
**dass** der Vorsprung (7) als in der Nut (2) zusammen mit der Anschlagschiene (5) verschiebbare Kulisse ausgebildet ist.

11. Vorrichtung nach mindestens einem der Ansprüche 1 bis 10,
**dadurch gekennzeichnet,**
**daß** die Leiste (12) mindestens einen Schlitz (25) zur Führung eines Messers aufweist.

12. Vorrichtung nach mindestens einem der Ansprüche 1 bis 11,
**dadurch gekennzeichnet,**
**daß** die Leiste (12) mit einem bewegbaren Körner (26) ausgerüstet ist.

13. Vorrichtung nach mindestens einem der Ansprüche 1 bis 12,
**dadurch gekennzeichnet ,**
**daß** die Leiste (12) mit mindestens einer Libelle (22) versehen ist.

14. Vorrichtung nach Anspruch 13,
**dadurch gekennzeichnet,**
**daß** die Libelle (22) einstellbar an der Leiste (12) angeordnet ist.

15. Vorrichtung nach mindestens einem der Ansprüche 1 bis 14,
**dadurch gekennzeichnet,**
**daß** die Leiste (12) mit mindestens einer Bohrlehre (23) versehen ist.

16. Vorrichtung nach Anspruch 15,
**dadurch gekennzeichnet,**
**daß** die Bohrlehre (23) auswechselbar an der Leiste (12) befestigt ist.

## Claims

1. A device for forming angles, including a linear-type base element and a stop rail that is attached thereon such that it can be moved to and fixed in various positions,
**characterised in that**
the base element (1) has a longitudinally extending guidance means for the displaceable accommodation of the stop rail (5) and the underside of the stop rail (5) is furnished with depressions (8) extending in a star formation at an acute angle to each other to accommodate a projection (7) located on the base element (1) that extends in the longitudinal direction of the base element.

2. The device as cited in claim 1,
**characterised in that**
the guidance means (2, 2b) is conformed as a groove (2) or a ridge (2b).

3. The device as cited in claim 2,
**characterised in that**
the groove (2) is undercut and accommodates the head (3) of a set screw (4) on the stop rail (5).

4. The device as cited in at least one of claims 1 to 3,
**characterised in that**
the underside of the base element (1) has an undercut groove (9) for accommodate the head of a tensioning mechanism.

5. The device as cited in at least one of claims 1 to 4,
**characterised in that**
the base element (1) is furnished with a further guidance means (10) to accommodate a guide member (11) of a bar (12).

6. The device as cited in claim 5,
**characterised in that**
the guidance means (10) is arranged on the upper side of the base element (1) and is conformed as a ridge or a groove.

7. The device as cited in claim 5 or 6,
**characterised in that**
the bar (12) is provided with an adjustable limit stop (14) that extends parallel to the base element (1).

8. The device as cited in at least one of claims 1 to 7,
**characterised in that**
the undercut grooves (2, 9, 10), the head (3) of the set screw (4), the head of the tensioning screw and the head (11) of the guide bar (12) have a T-shaped cross-section.

9. The device as cited in claim 1,
**characterised in that**
the projection (7) is conformed as a ridge extending longitudinally along the upper side of the base element (1).

10. The device as cited in claims 1 and 2,
**characterised in that**
the projection (7) is conformed as a connecting member that is displaceable in the groove (2) together with the stop rail (5).

11. The device as cited in at least one of claims 1 to 10,
**characterised in that**
the guide bar (12) is furnished with at least one slot (25) for guiding a gauge.

12. The device as cited in at least one of claims 1 to 11,
**characterised in that**
the guide bar (12) is equipped with a movable centre punch (26).

13. The device as cited in at least one of claims 1 to 12,
**characterised in that**
the guide bar (12) is provided with at least one spirit level (22).

14. The device as cited in claim 13,
**characterised in that**
the spirit level (22) is arranged so as to be movable on the guide bar (12).

15. The device as cited in at least one of claims 1 to 14,
**characterised in that**
the guide bar (12) is provided with at least one boring jig (23).

16. The device as cited in claim 15,
**characterised in that**
the boring jig (23) is detachably attached to the guide bar (12).

## Revendications

1. Dispositif de définition d'angles, consistant en un rail de base en forme de règle et en un rail à talon pouvant tourner et être bloqué sur celui-ci dans différentes positions,
**caractérisé en ce que**
le rail de base (1) présente un guide s'étendant dans le sens longitudinal et destiné à recevoir de manière mobile le rail à talon (5) et que la face inférieure du rail à talon (5) est pourvue de renfoncements (8) s'étendant en forme étoilée suivant un angle aigu entre eux et destinés à recevoir une saillie (7) se trouvant sur le rail de base (1) et s'étendant dans le sens longitudinal du rail de base.

2. Dispositif selon la revendication 1,
**caractérisé en ce que**
le guide (2, 2b) est réalisé sous forme d'une rainure (2) ou d'une nervure (2b).

3. Dispositif selon la revendication 2,
**caractérisé en ce que**
la rainure (2) est réalisée avec un dégagement et reçoit la tête (3) d'une vis de blocage (4) du rail à talon (5).

4. Dispositif selon au moins une des revendications 1 à 3,
**caractérisé en ce que**
le rail de base (1) présente, sur sa face inférieure, une rainure à dégagement (9) destinée à recevoir la tête d'un dispositif de serrage.

5. Dispositif selon au moins une des revendications 1 à 4,
**caractérisé en ce que**
le rail de base (1) présente un autre guide (10) destiné à recevoir une pièce de guidage (11) d'une baguette (12).

6. Dispositif selon la revendication 5,
**caractérisé en ce que**
le guide (10) est disposé sur la face supérieure du rail de base (1) et est réalisé sous forme d'une nervure ou d'une rainure.

7. Dispositif selon la revendication 5 ou 6,
**caractérisé en ce que**
la baguette (12) est pourvue d'un talon réglable (14) s'étendant parallèlement au rail de base (1).

8. Dispositif selon au moins une des revendications 1 à 7,
**caractérisé en ce que**
les rainures à dégagements (2, 9, 10), la tête (3) de la vis de blocage (4), la tête de la vis de serrage et la tête (11) de la baguette de guidage (12) présentent une section transversale en forme de T.

9. Dispositif selon la revendication 1,
**caractérisé en ce que**
la saillie (7) est réalisée sous forme d'une nervure s'étendant dans le sens longitudinal sur la face supérieure du rail de base (1).

10. Dispositif selon la revendication 1 ou 2,
**caractérisé en ce que**
la saillie (7) est réalisée sous forme d'une coulisse déplaçable dans la rainure (2) avec le rail à talon (5).

11. Dispositif selon au moins une des revendications 1 à 10,
**caractérisé en ce que**
la baguette (12) présente au moins une fente (25) pour le guidage d'un système de mesure.

12. Dispositif selon au moins une des revendications 1 à 11,
**caractérisé en ce que**
la baguette (12) est équipée d'une pointe mobile (26).

13. Dispositif selon au moins une des revendications 1 à 12,
**caractérisé en ce que**
la baguette (12) est pourvue d'au moins une nivelle (22).

14. Dispositif selon la revendication 13,
**caractérisé en ce que**
la nivelle (22) est disposée avec possibilité de réglage sur la baguette (12).

15. Dispositif selon au moins une des revendications 1 à 14,
**caractérisé en ce que**
la baguette (12) est pourvue d'au moins un calibre de perçage (23).

16. Dispositif selon la revendication 15,
**caractérisé en ce que**
le calibre de perçage (23) est fixé avec possibilité d'échange sur la baguette (12).
